# EUROPEAN PATENT APPLICATION

(11) **EP 2 164 213 A1**
(43) Date of publication of application: **17.03.2010**
(21) Application number: 08305545.9
(22) Date of filing: 12.09.2008
(51) Int. Cl.: H04L 12/58, H04L 29/06

(54) **Device and method for automatically adapting messages and communication means during message exchanges between communicating objects and users**

(71) Applicant: Alcatel Lucent, 75008 Paris (FR)
(72) Inventor: Labrogère, Paul, 91190 Gif sur Yvette (FR); Poussiere, Fabrice, 92160 Antony (FR); Papillon, Serge, 75014 Paris (FR)
(74) Representative: Korakis-Ménager, Sophie

(57) **Abstract**

A device (D) is intended for interfacing communicating objects (CO1-CO3) using different known protocols and user communication equipments (UE1-UE2) capable of using different known communication means. This device (D) comprises i) a first adapting means (AM1) arranged, when it receives a message generated by a communicating objects (CO1) or a communication equipment (UE1) of a user by means of a known protocol and transmitted by means of a communication means, for adapting this received message into an adapted message consistent with a chosen protocol understandable by at least one concerned communication equipment (UE2) or communicating object (CO2), and ii) a transmission means (TM) arranged for transmitting each adapted message to at least one chosen communication equipment (UE2) of at least one concerned user or to at least one concerned communicating object (UE2) by means of a chosen communication means (CM3).

## Description

The present invention relates to interfacing of communicating objects using different known protocols and communication equipments of users capable of using different known communication means.

One means here by "communicating object" any type of device, system or apparatus capable of exchanging messages with at least one other communicating object or communication equipment through a communication network. So, it may be a home automation related device (such as a washing machine, a freezer or an alarm system) or a robot (such as an autonomous vacuum cleaner or an electronic pet or toy), for instance.

As it is known by the man skilled in the art, a lot of communicating objects are now coexisting. These communicating objects having different types and having been developed by different companies, one generally needs to use numerous protocols to interact with them and more precisely to get information from them, such as local events occurred into them or in their vicinity, or to transmit to them an action (or command or else control) to be executed.

In order to ease this interaction it has been proposed to send messages, containing action definition(s) and intended for the communicating objects, by means of Bluetooth communication means and to send the messages (or notifications) containing event definition(s) and intended for the user communication equipments by means of SMS ("short messages"). But, this solution is not satisfying because a user may be busy or away from its communication equipment when he receives a SMS, and therefore he can not react quickly to its content (event).

So, there is no solution allowing user communication equipments to interact in a unified manner with communicating objects using different protocols and different communication means.

Therefore the object of this invention is to improve the situation.

For this purpose, it provides a method, intended for interfacing communicating objects using different known protocols and user communication equipments capable of using different known communication means, and consisting:
- either in adapting each message generated by a communicating object by means of a known protocol and transmitted by means of a communication means into an adapted message consistent with a chosen protocol and then in transmitting this adapted message to at least one chosen communication equipment of each concerned user by means of a chosen communication means,
- or in adapting each message generated by a communication equipment of a user by means of a chosen protocol and transmitted by means of a communication means into an adapted message consistent with at least one chosen protocol understandable by at least one concerned communicating object and then in transmitting this adapted message to this at least one communicating object by means of a chosen communication means.

The method according to the invention may include additional characteristics considered separately or combined, and notably:
- each message may contain either a definition of at least one event occurred in a communicating object or in the vicinity of the latter, or a definition of at least one action decided by a user, or else a part of a multimedia flow;
- one may choose a communication means depending on its availability in a concerned communicating object or user communication equipment and/or on communication information stored in correspondence with an identifier of a concerned communicating object or user communication equipment;
- one may adapt the content of a chosen message while keeping the semantic of this content in order to present it according to a chosen manner which depends on the chosen communication means that will have to be used for transmitting them into a chosen message;
- one may temporarily store the content of a chosen message in order to transmit it when a concerned communicating object or user communication equipment is ready again to receive it;
   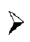 one may aggregate at least two temporarily stored contents into a chosen message to be transmitted to a concerned communicating object or user communication equipment.

The invention also provides a device, intended for interfacing communicating objects using different known protocols and user communication equipments capable of using different known communication means, and comprising:
- a first adapting means arranged, when it receives a message generated by a communicating objects or a communication equipment of a user by means of a known protocol and transmitted by means of a communication means, for adapting this received message into an adapted message consistent with a chosen protocol understandable by at least one concerned communication equipment or communicating object, and
- a transmission means arranged for transmitting each adapted message to at least one chosen communication equipment of at least one concerned user or to at least one concerned communicating object by means of a chosen communication means.

The device according to the invention may include additional characteristics considered separately or combined, and notably :
- it may further comprise a second adapting means arranged for adapting the content of a chosen message while keeping its semantic in order to present it according to a chosen manner depending on the chosen communication means to be used for transmitting it into a chosen message;
- it may further comprise a control means arranged for choosing a communication means depending on its availability in a concerned communicating object or user communication equipment and/or on communication information stored in correspondence with an identifier of a concerned communicating object or user communication equipment;
   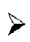 this control means may be arranged for storing temporarily the content of a chosen message to order its transmission when a concerned communicating object or user communication equipment is ready again to receive it;
      - this control means may be arranged for aggregating at least two temporarily stored contents into a chosen message to be transmitted to a concerned communicating object or user communication equipment.

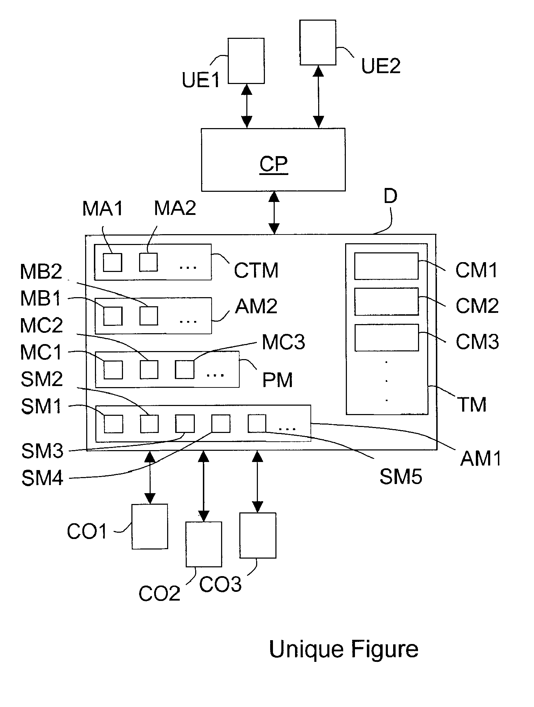

Other features and advantages of the invention will become apparent on examining the detailed specifications hereafter and the appended drawing, wherein the unique figure schematically illustrates an example of embodiment of a device according to the invention to which user communication equipments and communicating objects are coupled.

The appended drawing may serve not only to complete the invention, but also to contribute to its definition, if need be.

The invention aims at offering a device (D), and the associated method, intended for automatically adapting messages which are exchanged by communicating objects (COi) using different known protocols and communication equipments (UEj) of users capable of using different known communication means.

As mentioned before one means here by "communicating object (COi)" a device, system or apparatus which is capable of exchanging messages consistent with a known protocol with at least one other communicating object COi' or a communication equipment UEj through a communication network (not illustrated) and by means of at least one known communication means.

In the following description it will be considered as example that the communicating objects COi (here i = 1 to 3) are home automation related device.

Moreover, one means here by "communication equipment (UEj)" a terminal, device or apparatus which is capable of exchanging messages consistent with a known protocol with at least one other communication equipment UEj' or a communicating object COi through a communication network (not illustrated) and by means of at least one known communication means. So, it may be a computer, a laptop, a fixed or mobile (or cellular) telephone, a personal digital assistant (PDA) having a communication module, a set top box (STB), or a sub-element (such as a connected media box), for instance.

In the following description it will be considered as example that the communication equipments UEj (here j = 1 or 2) are mobile telephone.

As illustrated, these communication equipments UEj are preferably coupled to the device D through a communication platform CP.

More, one means here by "communication means" any type of module or interface comprised into a communication equipment UEj or communicating object COi or else device D and capable of receiving and emitting messages from and to a communication network. So, it may be a Bluetooth module, a GSM (or GPRS/EDGE or UMTS or CDMA (2000) or else LTE) module, a WiMAX module, an Ethernet module (WiFi, xDSL, optical fiber, or cable), for instance.

It is important to note that a device D according to the invention may be part of, or coupled to, a network equipment, such as a server or a service platform, connected to a (wired or wireless) communication network. So, such a device D can be made of software modules or electronic circuit(s) (or hardware modules) or else a combination of hardware and software modules.

As schematically illustrated in the unique figure, a device D according to the invention comprises at least a first adapting module AM1 and a transmission module TM.

The first adapting module AM1 is arranged for intervening each time its device D receives a message which has been generated by a communicating object COi or a user communication equipment UEj by means of a known protocol and transmitted by means of a communication means.

One means here by "known protocol" a proprietary (or vendor) protocol as well as a standardized protocol used for generating a message to be transmitted.

Moreover, one means here by "message" a group of data defining notably either one or several events occurred in a communicating object COi or in the vicinity of such a communicating object COi, or one or several actions (or commands or else controls) decided by a user of a communication equipment UEj, or else a part of a multimedia flow.

So, when a message is received by a device D, its first adapting module AM1 adapts this received message (if necessary) into an adapted message which is consistent with a chosen protocol that is understandable by at least one concerned communication equipment UEj if this received message comes from a communicating object COi, or by at least one concerned communicating object COi if this received message comes from a communication equipment UEj.

A concerned communicating object COi is a communicating object which is associated with an identifier comprised into a message received from a communication equipment UEj and which is the addressee of this received message.

A concerned communication equipment UEj is a communication equipment which is either associated with an identifier comprised into a message received from a communicating object COi and which is the addressee of this received message, or associated with an identifier which is itself associated to an identifier comprised into a message received from a communicating object COi and which is associated to a communication equipment UEj' of the same user initially planned to be the addressee of this received message.

Indeed, when a user may be joined onto several (at least two) communication equipments UEj, one of his communication equipments UEj, which is the addressee of a received message, may be unavailable by means of the communication means that has been used by the communicating object COi to transmit this message. So, there are at least three solutions to join this user.

A first solution consists in transmitting the adapted message to another communication equipment UEj' of this user which is available by means of the communication means that has been used by the communicating object COi to transmit its message.

A second solution consists in transmitting the adapted message to the planned communication equipment UEj of this user by means of a communication means that is different from the one used by the communicating object COi to transmit its message, if it is available by means of this different communication means.

A third solution consists in transmitting the adapted message both to the planned communication equipment UEj and to at least one other communication equipment UEj' of this user either by means of a communication means that is different from the one used by the communicating object COi to transmit its message, or by means of the communication means that has been used by the communicating object COi to transmit its message.

So, the transmission module TM is arranged for transmitting an adapted message to at least one chosen communication equipment UEj of at least one concerned user, if this received message comes from a communicating object COi, or to at least one concerned communicating object COi, if this received message comes from a communication equipment UEj, by means of at least one chosen communication means CMk.

As illustrated in the non limiting example of the unique figure, the transmission module TM (which comprises the communication means CMk) may be part of the device D. This embodiment is well adapted to the case where the device D is a network equipment. But in case where the device D is part of a network equipment, the communication means CMk of the transmission module TM may be those of this network equipment.

These communication means CMk of the transmission module TM are modules or interfaces (or communication resources or else connection enablers) capable of receiving and emitting messages from and to a communication network. For instance a first one CM1 of these communication means is a Bluetooth module (or stack), a second one CM2 of these communication means is a WiFi module (or stack), and a third one CM3 of these communication means is a (wired or LAN ("Local Area Network")) Ethernet module (or stack). If a new communicating object COi' or communication equipment UEj' must be coupled to the device D and uses a communication means that is not yet offered by this device D, a corresponding additional communication module CMk' can be added to the existing pool of communication modules CMk of the transmission module TM.

As illustrated in the non limiting example of the unique figure, the first adapting module AM1, which can be seen as a layer, may comprise a pool of sub-modules SMp (here p = 1 to 5) that are each dedicated to the adaptation of one protocol, used by one specific type of communicating objects COi, into the chosen protocol, and reversely.

These sub-modules SMn may be drivers or plug-ins and more generally software modules that may be call "adapters" and which may be developed by the companies producing the communicating objects COi, or by other companies, or else by open source projects.

For instance, a sub-module SMn may be dedicated to the protocol used by a freezer to generate messages (or notifications) comprising the definition of an event indicating that it has not detected butter or that its internal temperature is greater than a predetermined threshold. This freezer is capable of transmitting its messages (or notifications) to a local computer by means of a Bluetooth communication means, for instance. So, when the device D receives a Bluetooth message from this freezer its sub-module SMn dedicated to the protocol used by this freezer adapts (or converts or else transforms) this received Bluetooth message into an adapted message consistent with the chosen protocol.

It is important to note that each sub-module SMn is preferably arranged to adapt a received message consistent with a know protocol into an adapted message consistent with the chosen protocol, or a received message consistent with the chosen protocol into an adapted message consistent with a know protocol.

It is important to note that any multimedia format (voice or video) can be used at the level of the first adapting module AM1.

In case where a type of communicating object COi uses a protocol compatible with the chosen protocol, no specific sub-module SMn is needed.

If a new type of communicating objects COi' must be coupled to the device D and uses a protocol that can not yet be adapt by this device D, a corresponding additional sub-module SMn' can be added to the existing pool of sub-modules SMn of the first adapting module AM1.

As illustrated in the non limiting example of the unique figure, the device D according to the invention may further comprise a control module CTM which is intended for choosing the communication means CMk that will have to be used for transmitting an adapted message.

This choice can depend on the availability of a communication means in a concerned communicating object COi or user communication equipment UEj and/or on communication information (or user policy) that is stored in correspondence with an identifier of this concerned communicating object COi or user communication equipment UEj.

For instance this communication information (or user policy) indicates (or defines) user preferences relative to a communication equipment UEj on which he prefers to receive the messages, or to the communication means he prefers to use for receiving the messages.

The device D may comprise a storing means arranged for storing this communication information. Any type of storing means, known from the man skilled in the art, may be used. So, it can be a database, a flash memory, a RAM, a flat files system, or any other kind of repository.

The control module CTM may be also arranged for storing temporarily the content of a chosen message when the latter can not be transmitted to the concerned communicating object COi or user communication equipment UEj because of unavailability. So, when the control module CTM is aware of a recent availability of a chosen communication means of a communicating object COi or user communication equipment UEj, to which a stored content must be transmitted, it orders to the corresponding communication means CMk of the transmission module TM to transmit the adapted message containing this stored content to a concerned communicating object COi or user communication equipment UEj (which is now ready to receive it).

It is important to note that the control means CTM may be sometimes compelled to store temporarily several adapted message contents that can not be transmitted to the concerned communicating object COi or user communication equipment UEj because of unavailability. So, when the control module CTM is aware of a recent availability of a chosen communication means of a communicating object COi or user communication equipment UEj, to which stored contents must be transmitted, it may aggregate at least two of these stored contents, and then it orders to the corresponding communication means CMk of the transmission module TM to transmit the adapted message containing the aggregated stored contents to the concerned communicating object COi or user communication equipment UEj (which is now ready to receive it).

The control module CTM can be seen as a "functionality layer" which is working at message level for certain types of application (such as content temporary storing or content aggregation). So, it may comprise software modules MAp (p = 1, 2, ...) each dedicated to one type of application, for instance. It is in charge of interfacing the device D with the communication platform CP.

For instance, a first one MA1 of these software modules, called "Majordomo module", is in charge of regulating the instant messaging (or IM) exchanges between the communicating objects OBi (for instance all the one contained into its residence) and the user communication equipments UEj. To this effect it can store temporarily the event contents contained into the adapted messages to be transmitted and possibly proceed to content aggregations. The order in which the stored contents will be sent can be compelled by the emission time (default behaviour) or can follow a configurable priority.

For instance, another one MA2 of these software modules may be in charge of compelling the display of information indicating the presence of a robot.

The control module CTM can be able to understand global orders given by the user through a communication means CMk (for instance the IM one) and to pass these global orders to another module of the device D (for instance a second adapting module AM2 and/or a processing module PM which is/are described below).

As illustrated in the non limiting example of the unique figure, the device D according to the invention may also comprise a second adapting module AM2 which is arranged for adapting the content of a chosen message while keeping its semantic, if necessary. This adaptation is preferably performed onto the messages which have been adapted by the first adapting module AM1 and before their transmission. It aims at presenting a content according to a chosen manner which depends on the chosen communication means CMk that will have to be used to transmit it into a chosen message and/or on a user policy.

This second adapting module AM2 can be seen as a "presentation layer" which is dedicated to the adaptation of applicative format. So, it may comprise a pool of software modules MBm (m = 1, 2, ...) each dedicated to one applicative adaptation, for instance.

For instance, a first one MB1 of these software modules, called "Avatar module", is in charge of presenting the event contents contained into IM messages as if a user was present and relating these events. So it can store a list establishing a correspondence between avatars (or names) and at least some of the communicating objects COi coupled to the device D.

As illustrated in the non limiting example of the unique figure, the device D according to the invention may also comprise a processing module PM which is arranged for processing the message depending on their respective types (event, action and multimedia flow).

This processing module PM, which can be seen as a "processing layer", may comprise a pool of software modules MCq (q = 1, 2, ...) each dedicated to one type of message, for instance. It is preferably intercalated between the first AM1 and second AM2 adaptation modules to act as an interface therebetween.

For instance a first one MC1 of these software modules is dedicated to the messages containing the definition of at least one event. It can be arranged to give a semantic meaning to the content of an event message, such as "low battery" or "the washing program is ended", in order this content could be easily understood by the concerned user.

A second one MC2 of these software modules can be dedicated to the messages containing the definition of at least one action (or control or command). It can be arranged to treat every data coming from a user communication equipment UEj and intended to a communicating object COi. For instance, this treatment aims at converting an action (defined by a user in his language into an action understandable by the concerned communication object(s) COi.

A third one MC3 of these software modules can be dedicated to the messages containing data of a multimedia flow. It can be arranged to treat every data of a multimedia flow. For instance such a treatment may consist in adapting a codec following upon an adaptation of protocol performed by the first adaptation module AM1.

If a new type of message must be exchanged between communicating objects COi and communication equipments UEj and is not yet taken into account by the device D, a corresponding additional software module MCq' can be added to the existing pool of software modules MCq of the processing module PM.

The invention can also be considered in terms of a method for interfacing communicating objects COi using different known protocols and user communication equipments UEj capable of using different known communication means.

Such a method may be implemented by means of a device D such as the one above described with reference to the unique figure. Therefore, only its main characteristics will be mentioned hereafter.

The method according to the invention consists:
- either in adapting each message generated by a communicating object COi by means of a known protocol and transmitted by means of a communication means into an adapted message consistent with a chosen protocol and then in transmitting this adapted message to at least one chosen communication equipment UEj of each concerned user by means of a chosen communication means CMk,
- or in adapting each message generated by a user communication equipment UEj by means of a chosen protocol and transmitted by means of a communication means into an adapted message consistent with at least one chosen protocol understandable by at least one concerned communicating object COi and then in transmitting this adapted message to this at least one communicating object COi by means of a chosen communication means CMk.

The invention is not limited to the embodiments of method and device described above, only as examples, but it encompasses all alternative embodiments which may be considered by one skilled in the art within the scope of the claims hereafter.

## Claims

1. Method for interfacing communicating objects (COi) using different known protocols and communication equipments (UEj) of users capable of using different known communication means, **characterized in that** it consists:
- either in adapting each message generated by a communicating object (COi) by means of a known protocol and transmitted by means of a communication means into an adapted message consistent with a chosen protocol and then in transmitting said adapted message to at least one chosen communication equipment (UEj) of each concerned user by means of a chosen communication means (CMk),
- or in adapting each message generated by a communication equipment (UEj) of a user by means of a chosen protocol and transmitted by means of a communication means into an adapted message consistent with at least one chosen protocol understandable by at least one concerned communicating object (COi) and then in transmitting said adapted message to said at least one communicating object (COi) by means of a chosen communication means (CMk).

2. Method according to claim 1, **characterized in that** each message contains either a definition of at least one event occurred in a communicating object (COi) or in the vicinity of the latter, or a definition of at least one action decided by a user, or else a part of a multimedia flow.

3. Method according to one of claims 1 and 2, **characterized in that** one chooses a communication means (CMk) depending on its availability in a concerned communicating object (COi) or user communication equipment (UEj) and/or on communication information stored in correspondence with an identifier of a concerned communicating object (COi) or user communication equipment (UEj).

4. Method according to one of claims 1 to 3, **characterized in that** one adapts the content of a chosen message while keeping the semantic of this content in order to present it according to a chosen manner depending on the chosen communication means (CMk) to be used for transmitting it into a chosen message.

5. Method according to one of claims 1 to 4, **characterized in that** one temporarily stores the content of a chosen message in order to transmit it when a concerned communicating object (COi) or user communication equipment (UEj) is ready again to receive it.

6. Method according to claim 5, **characterized in that** one aggregates at least two temporarily stored contents into a chosen message to be transmitted to a concerned communicating object (COi) or user communication equipment (UEj).

7. Device (D) for interfacing communicating objects (COi) using different known protocols and communication equipments (UEj) of users capable of using different known communication means, **characterized in that** it comprises:
- a first adapting means (AM1) arranged, when it receives a message generated by a communicating objects (COi) or a communication equipment (UEj) of a user by means of a known protocol and transmitted by means of a communication means, for adapting said received message into an adapted message consistent with a chosen protocol understandable by at least one concerned communication equipment (UEj) or communicating object (COi), and
- a transmission means (TM) arranged for transmitting each adapted message to at least one chosen communication equipment (UEj) of at least one concerned user or to at least one concerned communicating object (COi) by means of a chosen communication means (CMk).

8. Device according to claim 7, **characterized in that** it further comprises a second adapting means (AM2) arranged for adapting the content of a chosen message while keeping the semantic of this content in order to present it according to a chosen manner depending on the chosen communication means (CMk) to be used for transmitting it into a chosen message.

9. Device according to one of claims 7 and 8, **characterized in that** it further comprises a control means (CTM) arranged for choosing a communication means (CMk) depending on its availability in a concerned communicating object (COi) or user communication equipment (UEj) and/or on communication information stored in correspondence with an identifier of a concerned communicating object (COi) or user communication equipment (UEj).

10. Device according to claim 9, **characterized in that** said control means (CTM) is arranged for storing temporarily the content of a chosen message to order its transmission when a concerned communicating object (COi) or user communication equipment (UEj) is ready again to receive it.

11. Device according to claim 10, **characterized in that** said control means (CTM) is arranged for aggregating at least two temporarily stored contents into a chosen message to be transmitted to a concerned communicating object (COi) or user communication equipment (UEj).
